(19) Europäisches Patentamt
European Patent Office
Office européen des brevets

(11) Numéro de publication : **0 278 861 B1**

(12) **FASCICULE DE BREVET EUROPEEN**

(45) Date de publication du fascicule du brevet :
27.02.91 Bulletin 91/09

(21) Numéro de dépôt : **88400266.8**

(22) Date de dépôt : **05.02.88**

(51) Int. Cl.⁵ : **G05D 7/06, F16K 41/10**

(54) **Vanne de régulation pour gaz.**

(30) Priorité : 09.02.87 FR 8701515

(43) Date de publication de la demande :
17.08.88 Bulletin 88/33

(45) Mention de la délivrance du brevet :
27.02.91 Bulletin 91/09

(84) Etats contractants désignés :
BE CH DE FR GB IT LI NL SE

(56) Documents cités :
DE-A- 2 120 431
DE-A- 3 009 388
FR-A- 1 139 569
GB-A- 247 194

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur : **Arnault, Jean**
**Cidex 639**
**F-38330 Saint-Nazaire-Les-Eymes (FR)**
Inventeur : **Loiseau, Gérard**
**4, rue Robespierre**
**F-78390 Bois D'Arcy (FR)**
Inventeur : **Molozay, Maurice**
**1, allée des Charpentiers**
**F-78320 Le-Mesnil-Saint-Denis (FR)**
Inventeur : **Scotto D'Apollonia, Sylvain**
**23, rue Maurice Ravel**
**F-78280 Guyancourt (FR)**

(74) Mandataire : **Sadones Laurent, Renée et al**
**L'AIR LIQUIDE 75, quai d'Orsay**
**F-75321 Paris Cédex 07 (FR)**

## Description

La présente invention concerne une vanne de régulation pour gaz, pour particulièrement une vanne à réglage automatique de faibles débits pour la régulation d'une pression gazeuse, agencée dans une conduite entre une source de gaz sous pression et un récepteur d'utilisation de gaz à pression régulée, et plus particulièrement du genre comprenant des moyens de réglage à timonerie à soufflet d'étanchéité agissant sur un pointeau de vanne et asservis à un moteur électrique à rotation d'avance ou de recul commandée par un signal électronique différentiel entre une pression de référence et une pression régulée mesurée, et où la timonerie à soufflet d'étanchéité comprend un actionneur articulé autour d'un axe fixe, ledit actionneur présentant un flasque transversal à la périphérie duquel est fixée à étanchéité une extrémité axiale d'un soufflet, l'autre extrémité axiale du soufflet étant fixée à étanchéité à une pièce-support annulaire fixe, l'actionneur ayant une extrémité de commande substantiellement perpendiculaire à la tige du pointeau. La réalisation pratique de telles vannes présente de très grandes difficultés, car elle doit répondre à un grand nombre d'exigences, dont certaines peuvent être contradictoires du point de vue constructif. En effet, non seulement une telle vanne de régulation doit avoir une commande facile, une progressivité de réglage, une grande dynamique et bien entendu un faible coût, mais en outre, un taux de fuite vers l'extérieur très faible, une garantie de haute fiabilité permettant la mise en oeuvre de gaz dangereux, et de surcroît, elle ne doit pas être polluante, c'est-à-dire qu'on doit pouvoir maîtriser sa propreté initiale par des zones pièges et son fonctionnement ne doit pas créer d'usure interne, ce qui implique d'éviter au maximum les frottements. De plus, on exige souvent une réalisation miniaturisée. De telles exigences se rencontrent notamment dans l'industrie des semi-conducteurs.

La plupart des vannes actuelles sont incapable de répondre à l'ensemble des conditions rappelées ci-dessus. Par exemple, les vannes à joint glissant présentent des risques de fuite et de pollution. Les vannes à solénoïde à noyau dit "humide" n'ont qu'une faible force de commande impliquant de limiter la course de pointeau, et sont sources de pollution à cause de leur noyau mobile ; elles sont prohibées pour les fluides très toxiques qui peuvent attaquer le noyau nécessairement en matériau magnétique. Les vannes thermiques à dilatation de solide présentent les avantages de simplicité, de grande raideur et une absence de joints glissants ; cependant elles nécessitent un asservissement complexe, présentent des difficultés de mesure de la position du pointeau et une course très faible interdisant en pratique une fermeture correcte.

On a proposé également d'équiper une vanne d'une commande à timonerie traversant un soufflet d'étanchéité et agissant sur la position axiale d'un pointeau de vanne, la commande de vanne étant asservie à un moyen, par exemple un moteur électrique d'avance-recul, lui-même commandé par un signal électrique différentiel traduisant l'écart entre la pression régulée et une pression de référence. Les soufflets, et plus particulièrement les soufflets "soudés" tolèrent des courses suffisantes, mais de tels soufflets "soudés" ont une tenue en pression limitée et une propreté difficile à assurer à cause de leur procédé de fabrication mettant en oeuvre un très grand nombre de soudures et aussi à cause de leur forme qui présente des zones mortes inaccessibles à l'endroit de chaque soudure externe des différents diaphragmes qui les constituent ; de plus, de tels soufflets sont, dans ce genre d'applications, montés à simple extension-compression axiale, ce qui impose l'utilisation d'actionneurs capables de développer des forces importantes, par exemple des vérins pneumatiques ou des systèmes vis-écrou à commande manuelle. Cette difficulté est encore accusée lorsque l'on veut réduire l'encombrement de la vanne en utilisant des soufflets de faible diamètre qui présentent des raideurs axiales importantes, de sorte qu'on doit respecter une dimension diamètrale minimale.

La présente invention a pour objet une disposition de vannes qui permet de résoudre l'ensemble des problèmes, dont la commande est du type à soufflet avec la timonerie à soufflet d'étanchéité avec actionnement articulé, présentant un flasque transversal à la périphérie duquel est fixé à étanchéité une extrémité axiale de soufflet, l'autre extrémité de soufflet étant fixé à étanchéité à une pièce-support fixe, l'extrémité de commande de l'actionneur étant substantiellement perpendiculaire à l'axe de pointeau, qui est du type à excavation longitudinalement variable coopérant, pour définir un passage de gaz, avec un joint annulaire du type à expandeur métallique, le dit pointeau venant en appui de poussée contre un tronçon-tige de liaison avec un clapet de fermeture étanche contre l'action d'un ressort de rappel. De la sorte, on assure une commande de pointeau qui se traduit, pour le soufflet, par un simple débattement angulaire, pratiquement sans extension compression axiale, ce qui, l'expérience le montre, nécessite une force d'actionnement très faible, et, surtout, l'intervention du joint à expandeur a pour effet une définition très corrects du passage de régulation du débit, tout en prenant en charge, sans être affecté, les légers déplacements pendulaires de la tige du pointeau, sous l'action de l'actionneur.

Les caractéristiques et avantages de l'invention ressortiront d'ailleurs de la description qui suit, à titre d'exemple, en référence aux dessins annexés dans lesquels :

- la figure 1 est une vue en élévation, partiellement en coupe, d'une vanne régulée selon l'invention ;

– les figures 2 et 3 sont des vues, à échelle agrandie du corps de vanne proprement dit ; en position fermée et ouverte respectivement,

– la figure 4 est une variante de réalisation du montage de l'actionneur de commande ;

– les figures 5, 6, 7, et 8, sont des vues en perspective de quatre formes de réalisations d'un pointeau de vanne.

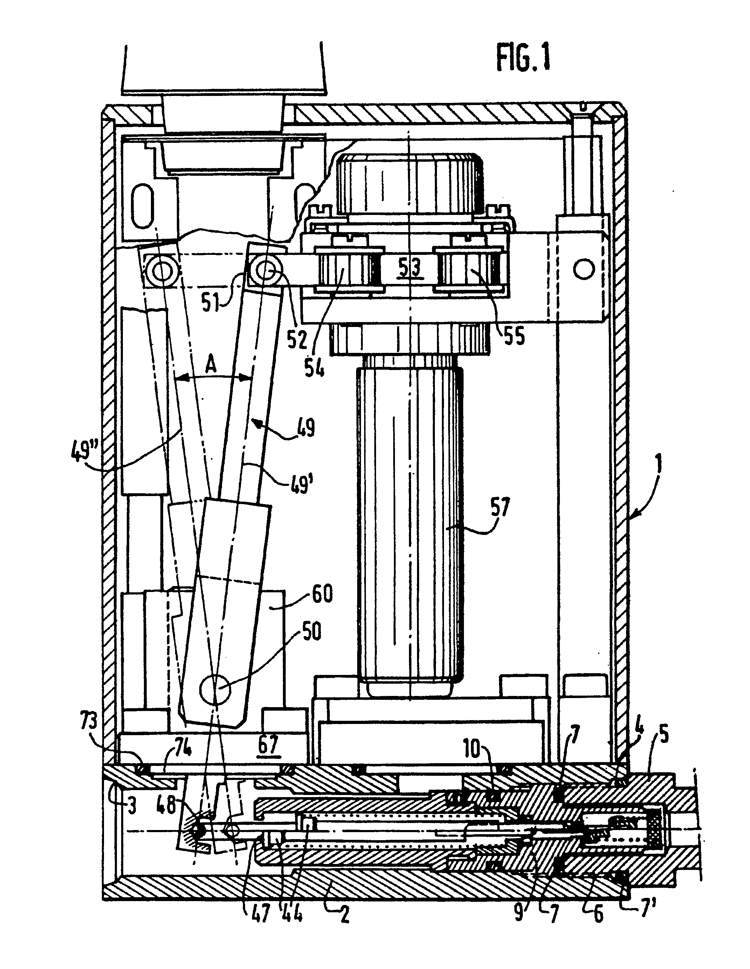

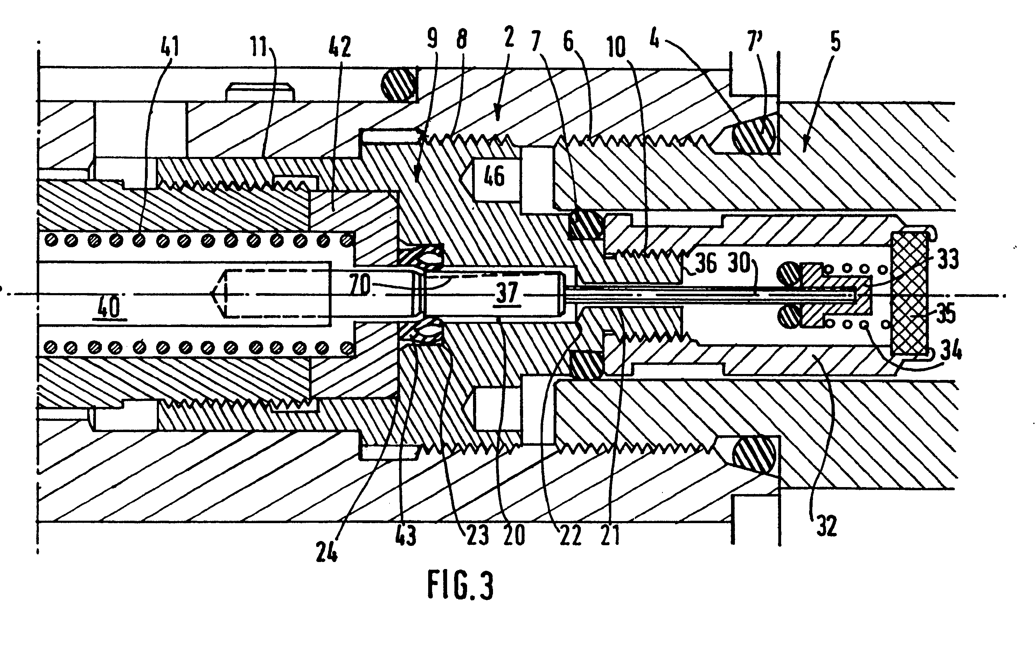

En se référant d'abord aux figures 1 à 3, une vanne régulée comprend un boîtier 1 traversé par un tronçon de conduit 2 avec une ouverture amont 3, sur laquelle est destiné à se brancher un raccord d'admission (non représenté) et une ouverture aval 4 pour un raccord de sortie 5 vissé en 6 avec compression de joints d'étanchéité 7 et 7'. A l'intérieur du tronçon de conduit 2 est vissé en 8 un corps de vanne 9 engagé d'autre part, à coulissement dans une portée cylindrique 11 du tronçon de conduit 1.

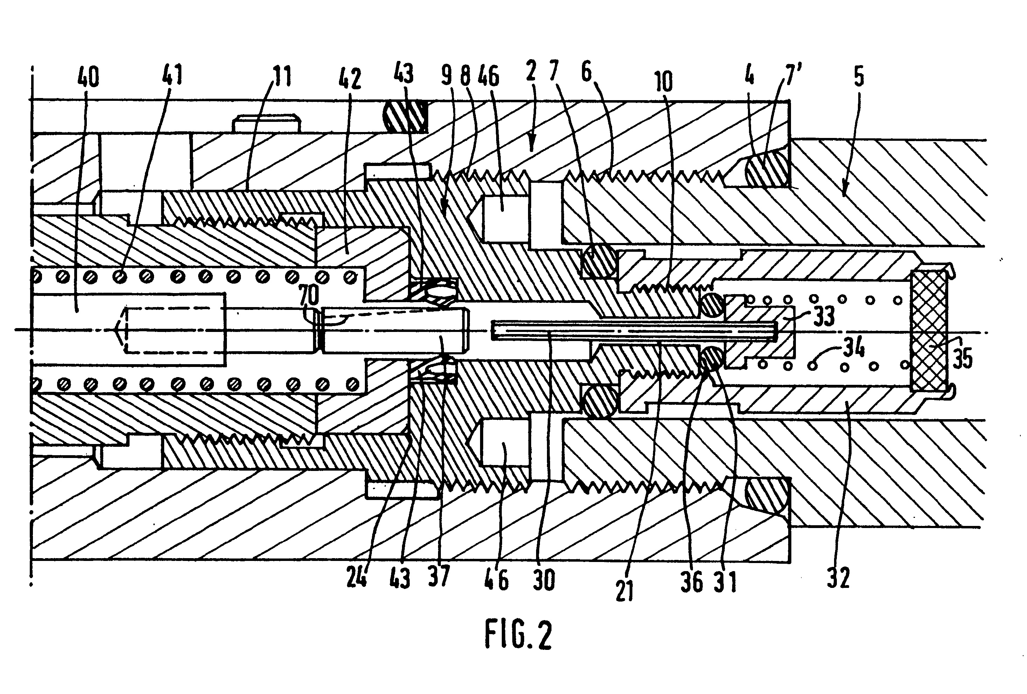

Le corps de vanne 9 présente un passage axial 20 s'étendant de part en part avec un diamètre restreint 21 et des épaulements 22, 23, 24. Un tronçon de tube 30 est engagé à coulissement libre dans le passage de section restreinte 21 et ce tube 30 est, à une extrémité, engagé librement à l'intérieur d'un clapet cylindrique 33, de forme creuse, formant cage de retenue pour un ressort de compression 34 s'appuyant d'autre part sur un bouchon poreux 35 fixé à l'extrémité d'un tronçon de conduit aval 32 vissé en 10 sur le corps de vanne 9. Dans la position rétractée du tube 30 (fig. 2), le clapet 33 s'appuie à étanchéité sur une face frontale 36 du corps de vanne 9 par un joint 31 monté à demeure sur le clapet 33.

Côté amont par rapport au passage restreint 21, un pointeau 37 est solidaire d'un tige de commande 40, sur laquelle est montée un ressort de compression 41 s'appuyant d'un côté contre un embout 42 engagé contre l'épaulement 24 avec compression d'un joint d'étanchéité 43 s'appuyant lui-même contre l'épaulement 23, d'un autre côté contre une bague 44 réglable sur le tige de commande 40 du pointeau 37. Le corps de vanne 9 est vissé en 8 dans un logement cylindrique formé par le tronçon de conduit 2 grâce à des trous coaxiaux 46 de vissage- dévissage. A l'extrémité amont, le corps de vanne 9 présente un passage de traversée 47 pour la tige de pointeau 40, dont l'extrémité extérieure porte une bille 48 d'appui dans une cavité d'un actionneur 49.

Cet actionneur 49 est monté à articulation sur un pivot 50, tandis que son autre extrémité 51 est articulée sur un axe 52 d'une barre de commande 53 guidée à simple translation par des galets 54 et 55 sous l'action d'une crémaillère qui engrène avec un pignon entraîné par un moteur électrique 57 d'avance-recul selon le sens du signal différentiel de commende entre un signal formé par un capteur de pression non représenté, mais situé à l'aval du pointeau 37 et un signal de référence de régulation.

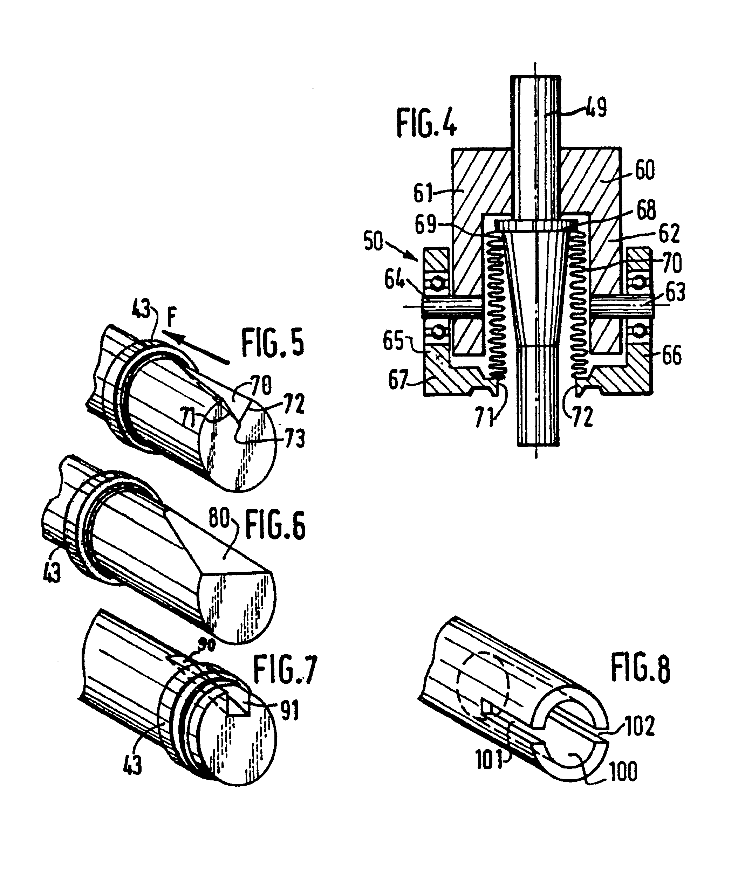

Le montage à articulation 50 de l'actionneur 49 est explicité à la figure 4. Sur l'actionneur 49 est solidarisé un étrier 60 dont deux branches 61 et 62 portent des tourillons 63, 64, engagés dans des paliers 65-66 d'un socle 67. L'actionneur 49 présente un flasque transversal 68 à l'intérieur de l'étrier 60, sur lequel est soudé une extrémité longitudinale 69 d'un soufflet d'étanchéité 70, dont l'autre extrémité longitudinale 71 est soudée à la périphérie d'une ouverture circulaire 72 du socle 67, qui est fixé en appui étanche par un joint 73 autour d'une ouverture 74 du tronçon de conduit 2, en sorte que le soufflet 70 forme avec le flasque 68 du levier 49 une séparation étanche entre l'intérieur du tronçon de conduit 2 et l'atmosphère externe.

Le pointeau 37 est du type à gorge longitudinale 70 (voir aussi figure 5) dont la profondeur s'accroit de l'aval vers l'amont de cette gorge 70 coopère avec le joint annulaire 43 pour former un passage plus ou moins ouvert selon la position axiale du pointeau 37. Ce joint annulaire 43 joue un rôle décisif dans la fiabilité de la vanne et à cet effet il est choisi du type à expandeur métallique logé dans une gorge annulaire d'un corps de joint en matière plastique. De tels points sont disponibles sous différentes marques, par exemples le joint "OMNISEAL SERIES 103" ou "OMNISEAL SERIE 400" de FLUOROCARBON, ou encore le joint "ENERSEAL MARK IV".

Le fonctionnement de la vanne décrite est le suivant :

L'actionneur externe 49 assure un mouvement de quasi-translation de la tige de commande 40. Il y a lieu de noter que les très légères oscillations qui se produisant sur la tige 40 et son pointeau 37 sont prises en charge par le joint à expandeur 43. Dans un premier temps le mouvement vers la droite de la tige 40 et du pointeau 37 assure une poussée sur le tube de liaison 30 engagé libre dans la passage 21 formant portée de coulissement. Cette poussée a pour effet de déplacer le clapet 35 porté à un bout du tube 30 en assurant le décollement du joint d'étanchéité 31 de la face frontale 36. Dans cette première position, la gorge 70 du pointeau 37 est encore entièrement située à l'amont par rapport au joint 43 et aucun passage de gaz n'est possible.

Le fonctionnement en régulation de la vanne intervient ensuite, lorsque la tige de commande 40 déplace le pointeau 37 plus vers la droite en découvrant ainsi un passage entre pointeau 37 à gorge 70 et joint annulaire 43 et ce passage a une section d'autant supérieure que le pointeau 37 se situe plus vers la droite. Ce sont ces déplacements du pointeau 37 dans un sens ou dans l'autre qui assurent la progressivité parfaite de la régulation du débit du fluide, qui passe dans l'espace libre défini par la section de la gorge 70 et le joint à expandeur 43.

Dès que la vanne est commandée à la fermeture, le pointeau 37 se déplace vers la gauche, obturant complétement tout passage au niveau du joint 43, et ensuite, après un déplacement plus accentué vers la gauche de la tige 40, le clapet 33 vient en appui étanche par son joint 31 contre le corps de vanne 9. On notera à ce sujet que le tube 30 permet un équilibrage des pressions de part et d'autre du joint 31, ce qui conforte son étanchéité.

Les figures 5 à 8 montrent quatre formes de réalisation d'un pointeau 37 selon l'invention présentant une excavation longitudinale :

– selon la figure 5, l'excavation est une gorge 70 de section triangulaire à deux parois 71 et 72, dont le fond 73 part de la surface du pointeau 37 en s'approfondissant progressivement. On comprend qu'un déplacement du pointeau 37 dans le sens de la flèche F permet un passage progressif de la gorge 70 sous le joint 23, dégageant un passage de communication de plus en plus large, donc un débit de plus en plus important.

– selon la figure 6, le pointeau présente une face biseautée 80 ce qui assure également l'effet de progressivité recherché d'ouverture en fonction de la position du pointeau par rapport au joint 43.

– selon la figure 7, une gorge rectangulaire 90 de profondeur variable assure le même effet en dégageant, au-delà du joint 43, une fenêtre 91 de passage de plus en plus grande.

– selon la figure 8, on obtient un effet de fenêtre latérale avec un pointeau avec une extrémité ayant une partie terminale creuse 100, et deux fentes latérales 101 et 102.

On note que l'interchangeabilité du corps de vanne 9 avec son équipement interne est particulièrement aisé, puisqu'il suffit de démonter le raccord de sortie 5 et de dévisser en 8 le corps de vanne 9 par action rotative en prenant appui dans les trous 46. Ce retrait du corps de vanne 9 est également facilité par la liaison à bille 48 entre type 40 et actionneur 49.

L'invention s'applique à la régulation de débits gazeux en particulier pour gaz à haute pureté. Dans ce dernier cas, les pièces de friction à bille 48 et son logement sont réalisée en matériau dur, saphir ou rubis par exemple.

## Revendications

1. Vanne de régulation pour gaz, du genre comprenant des moyens de réglage à timonerie à soufflet d'étanchéité agissant sur un pointeau de vanne (37) et asservis à un moteur électrique (57) à rotation d'avance ou de recul commandée par un signal électronique différentiel entre une pression de référence et une pression régulée mesurée, et où la timonerie à soufflet d'étanchéité comprend un actionneur (49) articulé autour d'un axe fixe (50), ledit actionneur présentant un flasque transversal (68) à la périphérie duquel est fixée à étanchéité une extrémité axiale (69) d'un soufflet (70), l'autre extrémité axiale (71) du soufflet (70) étant fixée à étanchéité à une pièce-support annulaire fixe (67), l'actionneur (49) ayant une extrémité de commande substantiellement perpendiculaire à la tige (40) du pointeau (37), caractérisée en ce que le pointeau (37) est du type à excavation longitudinalement variable (70), (80), (91), (100-101-102) coopérant pour définir un passage de gaz avec un joint annulaire (43) du type à expandeur métallique, le dit pointeau (37) venant en appui de poussée contre un tronçon-tige (30) de liaison avec un clapet de fermeture étanche (33) contre l'action d'une ressort de rappel (34).

2. Vanne de régulation, selon la revendication 1 caractérisée en ce que le tronçon-tige (30) est un tube creux (30).

3. Vanne de régulation, selon la revendication 1, caractérisée en ce qu'il comprend un corps de vanne (9) avec des trous (46) pour visser ou dévisser en (8) le dit corps de vanne (9) dans son logement.

4. Vanne de régulation, selon la revendication 1, caractérisée en ce que le raccord de sortie (5) est monté à vissage (6) avec une interposition des joints interne (7) et externe (7').

## Ansprüche

1. Regelungsventil für Gas mit Mitteln für die Gestängeregelung mit Dichtungsbalg, der auf eine Nadel des Ventils (37) wirkt und durch einen Elektromotor (57) mit Vor- und Rückdrehung gesteuert ist, der durch ein elektronisches Differenzsignal gesteuert ist zwischen einem Referenzdruck und einem gemessenen Regeldruck, wobei das Gestänge für den Dichtungsbalg ein Betätigungsteil (49) aufweist, welches um eine feste Achse (50) schwenkbar ist und einen transversalen Flansch (68) aufweist, an dessen Umfang dichtend ein axiales Ende (69) eines Balges (70) befestigt ist, wobei das andere axiale Ende (71) des Balges (70) dichtend mit einem festen Ringstützstück (67) befestigt ist, und wobei das Betätigungsteil (49) ein Steuerende im wesentlichen senkrecht zur Stange (40) der Nadel (37) hat, dadurch gekennzeichnet, daß die Nadel (37) vom Typ mit in der Länge variabler Ausnehmung (70), (80), (91), (100-101-102) ist, die zur Bildung eines Gasdurchganges mit einer ringförmigen Verbindung (43) vom Typ mit metallischem Expandierteil zusammenwirkt, wobei die Nadel (37) in Stoßabstützung gegen eine Teilstückstange (30) für die Verbindung mit einer Klappe für dichten Verschluß (33) entgegen der Wirkung einer Rückholfeder (34) kommt.

2. Regelventil nach Anspruch 1, dadurch gekennzeichnet, daß die Teilstückstange (30) ein Hohlrohr (30) ist.

3. Regelventil nach Anspruch 1, dadurch gekennzeichnet, daß es einen Ventilkörper (9) mit Löchern (46) zum Aufschrauben oder Abschrauben des Ventilkörpers (9) bei (8) in seinem Sitz aufweist.

4. Regelventil nach Anspruch 1, dadurch gekennzeichnet, daß das Anschlußstück des Ausganges (5) mit Schraubung (6) montiert ist mit einem Einfügen von inneren (7) und äußeren (7') Verbindungen.

## Claims

1. A gas regulating valve, of the type comprising regulating means comprising a linkage with a sealing bellows acting on a valve needle (37) and actuated by a forward-rearward rotating electric motor (57) controlled by an electronic signal differentiating between a reference pressure and a measured regulated pressure, and in which the linkage having a sealing bellows comprises an actuator (49) pivotally mounted on a fixed axis (50), said actuator including a transverse flange (68) to the periphery of which is fixed in a sealed manner an axial end (69) of a bellows (70), the other axial end (71) of the bellows (70) being sealingly fixed to a fixed annular support member (67), the actuator (49) having a control end substantially perpendicular to the rod (40) of the needle (37), characterised in that the needle (37) is of the type having a variable longitudinal recess (70), (80), (90), (100-101-102), cooperating for the purpose of defining a gas passage, with an annular sealing element (43) of the metallic expanding type, said needle (37) coming to exert a thrust against a rod section (30) connected with a valve (33) affording a sealed closure against the action of a return spring (34).

2. A regulating valve according to claim 1, characterised in that the rod section (30) is a hollow tube (30).

3. A regulating valve according to claim 1, characterised in that it comprises a valve body (9) with apertures (46) for screwing or unscrewing said valve body at (8) in its housing.

4. A regulating valve according to claim 1, characterised in that the outlet connector (5) is mounted by a screw-thread (6) with interposition of inner (7) and outer (7') sealing elements.

FIG.1

EP 0 278 861 B1

6

FIG.2

FIG.3

EP 0 278 861 B1

FIG.4

FIG.5

FIG.6

FIG.7

FIG.8